# EUROPEAN PATENT SPECIFICATION

(11) **EP 2 657 278 B1**
(45) Date of publication and mention of the grant of the patent: **21.06.2017**
(21) Application number: 11850529.6
(22) Date of filing: 08.12.2011
(51) Int. Cl.: B32B 15/04, B32B 27/06, B32B 27/32, B32B 27/34, B32B 27/36, B32B 5/18, B65B 7/00, E04B 1/80, C08J 9/36, F16L 59/065

(54) **CORE MATERIAL FOR A VACUUM INSULATION PANEL FORMED OF A PHENOLIC RESIN-CURED FOAM AND VACUUM INSULATION PANEL USING SAME, AND METHOD FOR MANUFACTURING SAME**
KERNMATERIAL FÜR EIN VAKUUMISOLATIONSPANEEL AUS EINEM PHENOLHARZ-GEHÄRTETEN SCHAUMSTOFF SOWIE VAKUUMISOLATIONSPANEEL DAMIT UND HERSTELLUNGSVERFAHREN DAFÜR
MATÉRIAU D'ÂME POUR UN PANNEAU D'ISOLATION SOUS VIDE CONSTITUÉ D'UNE MOUSSE DE RÉSINE PHÉNOLIQUE DURCIE ET PANNEAU D'ISOLATION SOUS VIDE L'UTILISANT ET SON PROCÉDÉ DE FABRICATION

(30) Priority: 24.12.2010 KR 20100134982
(43) Date of publication of application: 30.10.2013
(73) Proprietor: LG Hausys, Ltd., Seoul 07326 (KR)
(72) Inventor: KIM, Jung-Keun, Gunpo-si Gyeonggi-do 435-825 (KR); LEE, Eung-Kee, Gunpo-si Gyeonggi-do 435-745 (KR); LEE, Min-Hee, Gunpo-si Gyeonggi-do 435-060 (KR); KIM, Myeong-Hee, Daejeon 305-340 (KR)
(74) Representative: Zacco Denmark A/S
(86) International application number: PCT/KR2011/009481
(87) International publication number: WO 2012/086954

(56) References cited:
- EP-A1- 0 903 368
- WO-A1-2009/031623
- DE-A1- 10 211 274
- JP-A- H11 277 704
- JP-A- H11 343 681
- JP-A- 2000 054 522
- JP-A- 2001 114 922
- JP-A- 2006 029 413
- JP-A- 2006 057 398
- JP-A- 2006 300 123
- JP-A- 2010 131 848
- US-A- 4 507 447
- US-A- 5 250 579
- US-A- 5 721 284

## Description

### [Technical Field]

The present invention relates to a core material as disclosed in claim 1, a vacuum insulation panel using the core material, and a method for manufacturing the vacuum insulation panel. More particularly, the present invention relates to a technology for manufacturing a vacuum insulation panel with high thermal insulation performance and good long-term durability at reduced cost.

### [Background Art]

A general vacuum insulation panel is manufactured by accommodating a core material, such as an open cell hard plastic foam or an inorganic material, in an encapsulation material composed of a composite plastic laminate film having superior gas barrier properties, reducing the internal pressure of the encapsulation material, and heat sealing the circumferential edges of the laminated gas barrier films.

An inorganic compound with low thermal conductivity and outgassing is suitably used as a core material for a vacuum insulation panel. Particularly, a vacuum insulation panel using glass fiber laminate as a core material is known to have high thermal insulation performance.

In a conventional vacuum insulation panel, glass fiber wool or a glass fiber board is used alone as a core material. Glass fiber wool is produced by collecting a bulky glass fiber, followed by thermal pressing. The use of glass fiber wool as the core material can ensure thermal insulation performance of the vacuum insulation panel at a level of 0.45 W/mK.

The use of glass fiber wool as a core material for a vacuum insulation panel can ensure high initial thermal performance of the vacuum insulation panel, but gases permeate the vacuum insulation panel through a shell film during long-term use increasing the thermal conductivity of the vacuum insulation panel, and resulting in deterioration of long-term durability.

In contrast, the use of a glass fiber board as a core material for a vacuum insulation panel can minimize the thermal conduction of gases permeating the vacuum insulation panel due to the small diameter of pores of the glass fiber board despite long-term use. The vacuum insulation panel has the advantage of good long-term durability but is disadvantageous in terms of initial thermal insulation performance.

In conclusion, the vacuum insulation panel using glass fiber wool as a core material has a relatively short service life due to its poor long-term durability. This causes a problem of low reliability when the vacuum insulation panel is applied to home appliances as well as construction materials where a long service life of at least 10 years is required.

Problems encountered when using glass fiber board as a core material are high manufacturing cost and inferior molding properties, which limit the application of the vacuum insulation panel to a thermal insulation material.

US patent no. 5 721 284 discloses use of an open-celled rigid polyurethane foam for thermal isolation. The open-celled polyurethane foam is prepared by reacting a polyisocyanate with a polyol in the presence of a blowing agent and a cell opening agent. The cell opening agent is a mixture comprising a selected polyoxyalkylene polysiloxane and a second substance having a critical surface free energy less than 23 mJ/m². It is suggested in this patent that the polyurethane foam could be used for vacuum panels.

US patent no. 5 250 579 discloses a material according to the preamble of claim 1.

### [Disclosure]

### [Technical Problem]

An aspect of the present invention is to provide a core material according to claim 1, achieving low production cost, high thermal insulation performance and good long-term durability.

Another aspect of the present invention is to provide a vacuum insulation panel including a core material formed with a cured phenolic resin foam having a closed cell content of 20% or less wherein the core material includes cells having an average diameter of 50 to 500 µm and the cells have fine holes with an average diameter of 0.5 to 30 µm on the outer circumferential surfaces thereof to allow the cured phenolic resin foam to have a void content (which is defined as a percent of portions other than the solid in the foam) of at least 50%, thereby achieving improved structural strength and light weight, which enables its utilization in various applications.

### [Technical Solution]

In accordance with one aspect of the present invention, a core material for a vacuum insulation panel is formed with a cured phenolic resin foam having a closed cell content of 20% or less, wherein the cured phenolic resin foam includes cells having an average diameter of 50 to 500 µm, and the cells have fine holes with an average diameter of 0.5 to 30 µm on the outer circumferential surfaces thereof allowing the cured phenolic resin foam to have a void content of at least 50%.

In accordance with another aspect of the present invention, a vacuum insulation panel includes a core material according to claim 1 and a shell material surrounding the core material wherein the core material is packaged within the shell material under vacuum.

Preferably, the vacuum insulation panel further includes at least one getter material attached to or inserted into the core material and having a moisture absorption of at least 25%.

In accordance with another aspect of the present invention, a method for manufacturing a vacuum insulation panel includes producing a core material according to claim 1, applying a pressure of 0.5 to 10 Pa to the core material at a temperature of 50 to 250 °C for 10 to 200 minutes to remove remnants from the core material, and surrounding the core material with a shell material, followed by vacuum packaging.

### [Advantageous Effects]

The production cost of the core material of the present invention using a cured phenolic resin foam can be reduced to half or less that of a general core material using glass fiber wool.

In addition, the core material of the present invention uses a cured phenolic resin foam having a thermal conductivity of 0.03 W/mK or less. The high thermal insulation performance of the cured phenolic resin foam can maximally prevent deterioration of the performance of the core material resulting from thermal conduction.

Furthermore, the amount of organic compounds released from the cured phenolic resin foam is minimized, which prevents the degree of vacuum of the vacuum insulation panel from dropping and the overall thermal insulation performance of the vacuum insulation panel from deteriorating. Therefore, the thermal insulation performance of the vacuum insulation panel can be maintained for a long time of at least 10 years.

### [Description of Drawings]

Figs. 1 to 3 are schematic views illustrating core materials for vacuum insulation panels according to embodiments of the present invention.
Fig. 4 is a cross-sectional view of a getter material included in a vacuum insulation panel according to one embodiment of the present invention.
Figs. 5 and 6 are cross-sectional views of shell materials included in vacuum insulation panels according to embodiments of the present invention.
Figs. 7 and 8 are cross-sectional views illustrating vacuum insulation panels according to embodiments of the present invention.

### [Mode for Invention]

The above and other aspects, features, and advantages of the invention will become apparent from the detailed description of the following embodiments in conjunction with the accompanying drawings. It should be understood that the present invention is not limited to the following embodiments and may be embodied in different ways, and that the embodiments are given to provide complete disclosure of the invention and a thorough understanding of the invention to those skilled in the art. The scope of the invention is defined only by the claims. Like reference numerals indicate like elements throughout the specification and drawings.

Now, a core material for a vacuum insulation panel according to claim 1 and a method for producing the core material according to preferred embodiments of the present invention will be described in detail with reference to the accompanying drawings.

First, the core material and the method of the present invention will be discussed.

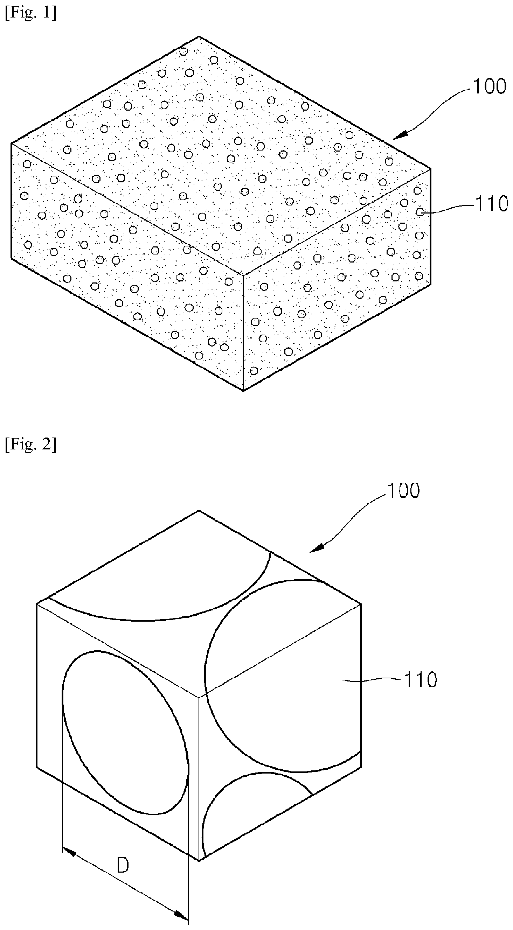

Figs. 1 to 3 are schematic views illustrating core materials for vacuum insulation panels according to embodiments of the present invention.

Fig. 1 illustrates a core material 100 in the form of a block that is formed with a cured phenolic resin foam. The foaming rate of cells 110 is controlled such that the closed cell content of the core material is 20% or less.

The closed cell content is defined as a fraction of closed cells in all cells formed per unit area. If the closed cell content exceeds 20%, the time for subsequent vacuum processing may be increased and gases may remain in the cured phenolic resin foam, causing outgassing in a final vacuum insulation panel.

Meanwhile, a closed cell content of 0% represents a physically impossible state that has a volume but no shape. Accordingly, the lower limit of the closed cell content is adjusted to greater than 0%.

The closed cell content is particularly preferably in the range of 1 to 10%. Within this range, the initial thermal insulation value of the core material is maintained at a low level and an increment in the thermal insulation value of the core material over time is considerably small.

The cured phenolic resin foam used in the core material of the present invention should meet requirements in terms of structural strength and closed cell content. To this end, the cured phenolic resin foam includes cells 110 having an average diameter of 50 to 500 µm and the cells have fine holes with an average diameter of 0.5 to 30 µm on the outer circumferential surfaces thereof

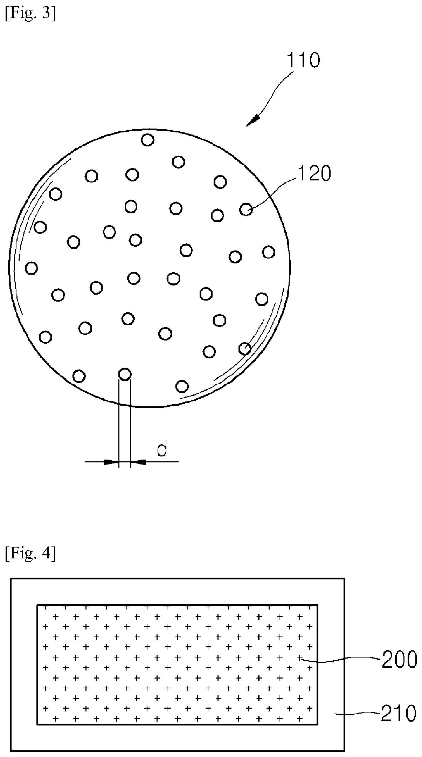

Fig. 2 schematically illustrates the diameter of one of the cells and Fig. 3 schematically illustrates the fine holes formed on the outer circumferential surface of one of the cells.

Referring to Fig. 2, the average diameter **D** of the cell is in the range of 50 to 500 µm when the core material 100 is cut along a line passing through the center of the cell 110.

Referring next to Fig. 3, the fine holes 120 having an average diameter **d** of 0.5 to 30 µm are formed on the outer circumferential surface of the cell 110.

The fine holes 120 serve to adjust the closed cell content to 20% or less while maintaining the structural strength of the core material despite the low closed cell content of the cured phenolic resin foam.

If the average diameter **d** of the fine holes 120 is less than 0.5 µm, the closed cell content of the cured phenolic resin foam exceeds 20%, and as a result, the core material 100 suffers from outgassing, which may deteriorate the long-term durability of a vacuum insulation panel. Meanwhile, if the average diameter **d** of the fine holes 120 is greater than 30 µm, the closed cell content approaches 0%, which may deteriorate the structural strength of the core material 100.

A vacuum insulation panel of the present invention includes a core material according to claim 1 and a shell material surrounding the core material wherein the core material is packaged within the shell material under vacuum. The vacuum insulation panel may further include at least one getter material attached to or inserted into the core material.

The getter material functions to prevent the generation of gases and moisture within the shell material due to changes in external temperature. The getter material will be explained below.

Fig. 4 is a cross-sectional view of a getter material included in a vacuum insulation panel according to an embodiment of the present invention.

Referring to Fig. 4, unslaked lime (CaO) 200 is put in a pouch 210. The unslaked lime used in the present invention is in the form of a powder and has a purity of 95% or higher. The pouch 210 is also made of pleated paper and a polypropylene (PP) impregnated non-woven fabric, which can ensure a moisture absorption of at least 25%. The thickness of the getter material is preferably limited to 2 mm or less taking into consideration the thickness of the vacuum insulation panel.

The cured phenolic resin foam used in the core material is produced by mixing a phenolic resin, a curing agent, a foaming agent, and one or more additives at a high stirring rate, and curing the mixture at room temperature or above. Water may be generated as a reaction product and monomers may remain unreacted. The reaction product and the unreacted monomers increase the probability of outgassing during vacuum packaging or after manufacture of the vacuum insulation panel.

In the present invention, it is preferred to apply a pressure of 0.5 to 100 Pa to the core material at a temperature of 50 to 250 °C for 10 to 200 minutes before vacuum packaging to remove remaining monomers (formaldehyde, remaining phenol, water) from the core material.

Such pressurization can minimize the generation of gases and moisture in the core material, thus eliminating the need to use the getter material. Moreover, the void content of the cured phenolic resin foam used in the core material of the present invention is maintained at a high level (at least 50%) due to the low shrinkage of the cured phenolic resin foam (less than 20%), leading to high performance.

Next, the shell material serves as an encapsulation material surrounding the core material. A detailed explanation will be given concerning the shape and production method of the shell material.

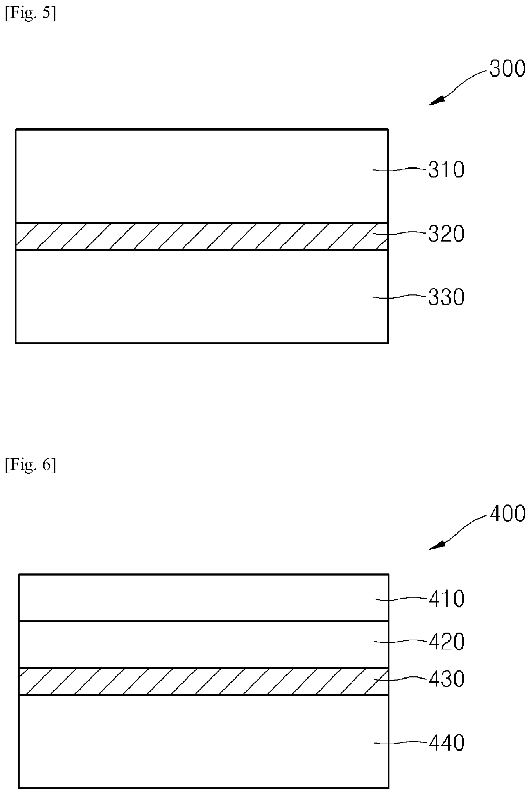

Figs. 5 and 6 are cross-sectional views of shell materials included in vacuum insulation panels according to embodiments of the present invention.

The shell material 300 illustrated in Fig. 5 has a structure in which a metal barrier layer 320 and a surface protective layer 310 are sequentially formed on an adhesive layer 330. The shell material 400 illustrated in Fig. 6 has a structure in which a metal barrier layer 430 is formed on an adhesive layer 440. The adhesive layer 330 or 440 is formed within the encapsulation material. The surface protective layer 310 can be defined as an outermost layer exposed to the outside.

The adhesive layer 330 or 440 is thermally welded to the core material by heat sealing and functions to maintain the vacuum state of the vacuum insulation panel. For this function, the adhesive layer 330 or 440 is formed of at least one thermoplastic plastic film selected among high density polyethylene (HDPE), low density polyethylene (LDPE), linear low density polyethylene (LLDPE), cast polypropylene (CPP), oriented polypropylene (OPP), polyvinylidene chloride (PVDC), polyvinyl chloride (PVC), ethylene-vinyl acetate copolymer (EVA) and ethylene-vinyl alcohol copolymer (EVOH) films, all of which are easily thermally welded to the core material. The thickness of the adhesive layer is preferably in the range of 1 to 100 µm. Within this range, sufficient sealing properties are provided.

Next, the barrier layer 320 or 430 formed on the adhesive layer 330 or 440 functions to block gases and protect the core material. The barrier layer 320 or 430 is formed of a metal thin film having a thickness of 6 to 7 µm. The most general material for the metal barrier layer 320 or 430 is an aluminum foil. Aluminum foil is used because no thin films are known to have superior characteristics to aluminum foil. Aluminum is apt to crack when folded due to material traits thereof. The surface protective layer 310 formed on the metal barrier layer 320 or 430 functions to prevent the occurrence of cracks.

Preferably, the surface protective layer of the shell material has a laminate structure of a 10 to 14 µm thick polyethylene terephthalate (PET) film 410 and a 20 to 30 µm thick nylon film 420.

Severe cracks may occur in the metal barrier layer 430, causing damage to the polyethylene terephthalate film 410/nylon film 420. In the present invention, a vinyl resin layer is coated on the polyethylene terephthalate layer to protect the polyethylene terephthalate film 410/nylon film 420 against damage.

The vinyl resin layer is preferably formed using at least one vinyl resin selected among polyvinyl chloride (PVC), polyvinyl acetate (PVA), polyvinyl alcohol (PVAL), polyvinyl butyral (PVB), and polyvinylidene chloride (PVDC) resins.

The surface protective layer 310, the metal barrier layer 320 or 430, and the adhesive layer 330 or 440 are preferably adhered to one another using polyurethane (PU) resins to further improve the air-tightness of the shell material.

The formation of the shell material 300 or 400 allows the vacuum insulation panel of the present invention to have optimal air-tightness and good long-term durability.

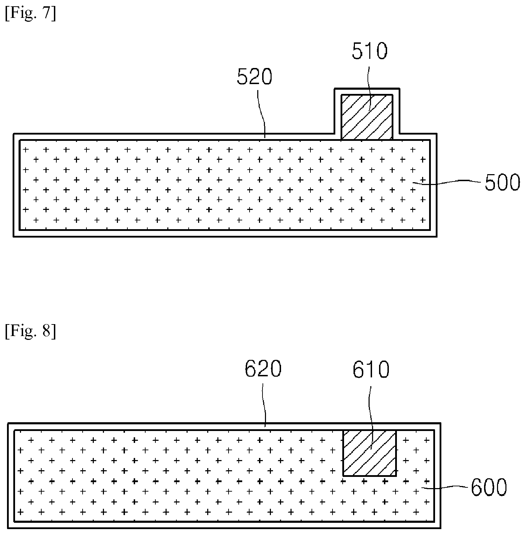

Figs. 7 and 8 are cross-sectional views illustrating vacuum insulation panels according to embodiments of the present invention.

The vacuum insulation panel illustrated in Fig. 7 has a structure in which a getter material is attached to the surface of a core material 500 and sealed with a shell material 520. The vacuum insulation panel illustrated in Fig. 8 has a structure in which a getter material 610 is inserted into a core material 600 and sealed with a shell material 620.

The vacuum insulation panel structures exhibit high thermal insulation performance and good long-term durability, and will be explained in detail with reference to the following examples.

### [Manufacture of vacuum insulation panels]

### Example 1

First, a cured phenolic resin foam having the structure explained with reference to Fig. 1 was prepared as a core material for a vacuum insulation panel. Specifically, the cured phenolic resin foam included cells whose average diameter was 100 µm and had a closed cell content of 1%, a void content of 97% and a size of 8 mm (thickness) × 190 mm (width) × 250 mm (length).

Next, a shell material was prepared. Specifically, the shell material had a structure consisting of a 12 µm thick polyvinylidene chloride (PVDC)/polyethylene terephthalate film (PET), a 25 µm thick nylon film, a 7 µm thick aluminum foil, and a 50 µm thick linear low density polyethylene (LLDPE) film.

Then, two getter materials were prepared. Specifically, each of the getter materials was produced by putting 25 g of unslaked lime (CaO) having a purity of 95% in a pouch. The getter materials were inserted into the surface of the core material, as illustrated in Fig. 8.

Then, a pressure of 5 Pa was applied to the core material at a temperature of 150 °C for 120 min to release all remaining gases from the core material.

Thereafter, the core material was inserted into the encapsulation material and sealed at a degree of vacuum of 10 Pa, completing the manufacture of a vacuum insulation panel.

### Example 2

A vacuum insulation panel was manufactured in the same manner as in Example 1, except that a cured phenolic resin foam including cells whose average diameter was 100 µm and having a closed cell content of 5%, a void content of 93% and a size of 8 mm (thickness) × 190 mm (width) × 250 mm (length) was used as a core material.

### Example 3

A vacuum insulation panel was manufactured in the same manner as in Example 1, except that a cured phenolic resin foam including cells whose average diameter was 100 µm and having a closed cell content of 10%, a void content of 90% and a size of 8 mm (thickness) × 190 mm (width) × 250 mm (length) was used as a core material.

### Example 4

A vacuum insulation panel was manufactured in the same manner as in Example 1, except that a cured phenolic resin foam including cells whose average diameter was 100 µm and having a closed cell content of 20%, a void content of 90% and a size of 8 mm (thickness) × 190 mm (width) × 250 mm (length) was used as a core material.

### Comparative Example 1

A vacuum insulation panel was manufactured in the same manner as in Example 1, except that a glass fiber board having a size of 8 mm (thickness) × 190 mm (width) × 250 mm (length) was used as a core material.

### Comparative Example 2

A vacuum insulation panel was manufactured in the same manner as in Example 1, except that a polyurethane foam including cells whose average diameter was 150 µm and having a closed cell content of 2%, a void content of 95% and a size of 8 mm (thickness) × 190 mm (width) × 250 mm (length) was used as a core material.

### Comparative Example 3

A vacuum insulation panel was manufactured in the same manner as in Example 1, except that a cured phenolic resin foam including cells whose average diameter was 100 µm and having a closed cell content of 50%, a void content of 90% and a size of 8 mm (thickness) × 190 mm (width) × 250 mm (length) was used as a core material.

### Comparative Example 4

A vacuum insulation panel was manufactured in the same manner as in Example 1, except that a cured phenolic resin foam including cells whose average diameter was 200 µm and having a closed cell content of 80%, a void content of 60% and a size of 8 mm (thickness) × 190 mm (width) × 250 mm (length) was used as a core material.

### [Performance testing and evaluation]

Each of the vacuum insulation panels manufactured in Examples 1-4 and Comparative Examples 1-4 was placed in a thermostatic chamber at 85 °C and allowed to stand for 3 months. The thermal conductivities of the vacuum insulation panels were compared with those of unheated specimens. The thermal conductivities were measured using a thermal conductivity tester (HC-074-200, EKO). Next, an acceleration factor was applied to predict the thermal conductivities of the vacuum insulation panels after 0-10 years. The results were expressed in W/mK and are shown in Table 1.

**TABLE 1**

| | Thermal conductivity (W/mK) | | | | | | | | | | |
|---|---|---|---|---|---|---|---|---|---|---|---|
| | Initial | 1 year | 2 years | 3 years | 4 years | 5 years | 6 years | 7 years | 8 years | 9 years | 10 years |
| Example 1 | 0.002 | 0.002 | 0.002 | 0.003 | 0.003 | 0.003 | 0.003 | 0.003 | 0.003 | 0.004 | 0.004 |
| Example 2 | 0.003 | 0.003 | 0.004 | 0.004 | 0.004 | 0.005 | 0.005 | 0.005 | 0.005 | 0.006 | 0.006 |
| Example 3 | 0.003 | 0.004 | 0.005 | 0.005 | 0.006 | 0.006 | 0.006 | 0.007 | 0.007 | 0.007 | 0.008 |
| Example 4 | 0.003 | 0.004 | 0.005 | 0.006 | 0.007 | 0.007 | 0.008 | 0.008 | 0.008 | 0.009 | 0.009 |
| Comparative Example 1 | 0.003 | 0.004 | 0.005 | 0.005 | 0.006 | 0.007 | 0.008 | 0.008 | 0.009 | 0.010 | 0.011 |
| Comparative Example 2 | 0.005 | 0.007 | 0.008 | 0.010 | 0.011 | 0.012 | 0.013 | 0.014 | 0.014 | 0.015 | 0.016 |
| Comparative Example 3 | 0.004 | 0.005 | 0.006 | 0.006 | 0.008 | 0.009 | 0.010 | 0.012 | 0.013 | 0.014 | 0.015 |
| Comparative Example 4 | 0.010 | 0.010 | 0.011 | 0.011 | 0.012 | 0.013 | 0.013 | 0.014 | 0.014 | 0.014 | 0.015 |

The vacuum insulation panels of Examples 1-4 had lower initial thermal conductivities and showed smaller increments over time than the vacuum insulation panels of Comparative Examples 1-4. Particularly, the vacuum insulation panel of Example 1, which was manufactured using the cured phenolic resin foam having a closed cell content of 1%, showed much smaller increments over time than the vacuum insulation panels of the other examples.

Therefore, the vacuum insulation panels of Examples 1-4, each of which was manufactured using the cured phenolic resin foam, had superior initial thermal insulation performance and good long-term durability.

Although the present invention has been described herein with reference to the foregoing embodiments, it is not limited to the embodiments and may be embodied in various different forms in accordance with the appended claims. Those skilled in the art will appreciate that the present invention may be practiced otherwise than as specifically described herein without changing the technical or essential features of the present invention. Therefore, it should be understood that the embodiments are to be considered illustrative in all aspects and are not to be considered as limiting the invention.

## Claims

1. A core material (100, 500, 600) for a vacuum insulation panel that is constituted of a cured phenolic resin foam, the cured phenolic resin foam has a void content of at least 50% and comprises cells (110) having an average diameter of 50 to 500 µm, **characterized in that** the cured phenolic resin foam has a closed cell content of 20% or less, and the cells (110) having fine holes (120) with an average diameter of 0.5 to 30 µm on the outer circumferential surfaces thereof.

2. A vacuum insulation panel comprising
- the core material (100, 500, 600) according to claim 1, and
- a shell material (300, 400, 520, 620) surrounding the core material
wherein the core material is packaged within the shell material under vacuum.

3. The vacuum insulation panel according to claim 2, further comprising at least one getter material (610) attached to or inserted into the core material and having a moisture absorption of at least 25%.

4. The vacuum insulation panel according to claim 2, wherein the shell material has a structure in which a surface protective layer (310) a metal barrier layer (320, 430) and an adhesive layer (330, 440) are formed in this order from the outside.

5. The vacuum insulation panel according to claim 4, wherein the surface protective layer (310) has a laminate structure of a polyethylene terephthalate (PET) film and a nylon film, the metal barrier layer is formed of an aluminum foil, and the adhesive layer comprises at least one polymer selected among high density polyethylene (HDPE), low density polyethylene (LDPE), linear low density polyethylene (LLDPE), cast polypropylene (CPP), oriented polypropylene (OPP), polyvinylidene chloride (PVDC), polyvinyl chloride (PVC), ethylene-vinyl acetate copolymer (EVA) and ethylene-vinyl alcohol copolymer (EVOH).

6. The vacuum insulation panel according to claim 4, wherein the surface protective layer (310) is adhered to the metal barrier layer using a polyurethane (PU) resin, and the metal barrier layer is adhered to the adhesive layer (330, 440) using a polyurethane (PU) resin.

7. A method for manufacturing a vacuum insulation panel comprising:
- producing the core material (100, 500, 600) according to claim 1;
- applying a pressure of 0.5 to 10 Pa to the core material at a temperature of 50 to 250 °C for 10 to 200 minutes to remove remnants from the core material; and
- surrounding the core material with a shell material (300, 400, 520, 620), followed by vacuum packaging.

## Patentansprüche

1. Kernmaterial (100, 500, 600) für ein Vakuumisolationspaneel, das aus einem gehärteten Phenolharz-Schaumstoff gebildet ist, wobei der gehärtete Phenolharz-Schaumstoff einen Hohlraumgehalt von mindestens 50 % aufweist und Zellen (110) umfasst, die einen durchschnittlichen Durchmesser von 50 bis 500 µm aufweisen, **dadurch gekennzeichnet, dass** der gehärtete Phenolharz-Schaumstoff eine Geschlossenzelligkeit von 20% oder weniger aufweist, und **dass** die Zellen (110) feine Löcher (120) mit einem durchschnittlichen Durchmesser von 0,5 bis 30 µm an den äußeren Umfangsflächen davon aufweisen.

2. Vakuumisolationspaneel umfassend
- das Kernmaterial (100, 500, 600) nach Anspruch 1, und
- ein das Kernmaterial umgebendes Mantelmaterial (300, 400, 520, 620)
wobei das Kernmaterial innerhalb des Mantelmaterials unter Vakuum verpackt ist.

3. Vakuumisolationspaneel nach Anspruch 2, ferner umfassend mindestens ein Gettermaterial (610), das an das Kernmaterial angehaftet oder in das Kernmaterial eingesetzt ist und eine Feuchtigkeitsaufnahme von mindestens 25% aufweist.

4. Vakuumisolationspaneel nach Anspruch 2, wobei das Mantelmaterial einen Aufbau aufweist, in welcher eine Oberflächenschutzschicht (310), eine Metallsperrschicht (320, 430) und eine Klebschicht (330, 440) in der genannten Reihenfolge von außen nach innen gebildet sind.

5. Vakuumisolationspaneel nach Anspruch 4, wobei die Oberflächenschutzschicht (310) einen Laminataufbau aus einer Polyethylenterephthalatfolie (PET) und einer Nylonfolie aufweist, die Metallsperrschicht aus einer Aluminiumfolie gebildet ist, und die Klebschicht mindestens ein Polymer umfasst, welches aus hochdichtem Polyethylen (HDPE), Polyethylen niedriger Dichte (LDPE), linearem Polyethylen niedriger Dichte (LLDPE), Cast-Polypropylen (CPP), orientiertem Polypropylen (OPP), Polyvinylidenchlorid (PVDC), Polyvinylchlorid (PVC), Ethylen-Vinylacetat-Copolymer (EVA) und Ethylen-VinylAlkohol-Copolymer (EVOH) ausgewählt ist.

6. Vakuumisolationspaneel nach Anspruch 4, wobei die Oberflächenschutzschicht (310) auf die Metallsperrschicht unter Verwendung eines Polyurethan- (PU)-Harzes geklebt ist, und die Metallsperrschicht auf die Klebschicht (330, 440) unter Verwendung eines Polyurethan- (PU)-Harzes geklebt ist.

7. Verfahren zur Herstellung eines Vakuumisolationspaneels umfassend:
- Herstellung des Kernmaterials (100, 500, 600) nach Anspruch 1;
- Anlegen eines Drucks von 0,5 bis 10 Pa auf das Kernmaterial bei einer Temperatur von 50 bis 250 °C für 10 bis 200 Minuten, um Rückstände aus dem Kernmaterial zu entfernen; und
- Umschließen des Kernmaterials mit einem Mantelmaterial (300, 400, 520, 620), gefolgt von Vakuumverpackung.

## Revendications

1. Matériau d'âme (100, 500, 600) pour un panneau isolant sous vide qui est constitué d'une mousse de résine phénolique durcie, ladite mousse de résine phénolique durcie ayant une teneur en vide d'au moins 50% et comprenant des cellules (110) avec un diamètre moyen de 50 à 500 µm, **caractérisé en ce que** la mousse de résine phénolique durcie a une teneur en cellules fermées de 20% ou moins, et **les** cellules (110) ont des trous fins (120) avec un diamètre moyen de 0,5 à 30 µm sur leurs surfaces circonférentielles extérieures.

2. Panneau d'isolation sous vide, comprenant
- le matériau d'âme (100, 500, 600) selon la revendication 1, et
- un matériau de coque (300, 400, 520, 620) entourant le matériau d'âme,
dans lequel le matériau d'âme est emballé dans le matériau de coque sous vide.

3. Panneau d'isolation sous vide selon la revendication 2, comprenant en outre au moins un matériau de getter (610) fixé à ou inséré dans le matériau de noyau et ayant une absorption d'humidité d'au moins 25%.

4. Panneau d'isolation sous vide selon la revendication 2, dans lequel le matériau de coque présente une structure dans laquelle une couche de protection de surface (310), une couche de barrière métallique (320, 430) et une couche adhésive (330, 440) sont formées dans cet ordre depuis l'extérieur.

5. Panneau d'isolation sous vide selon la revendication 4, dans lequel la couche de protection de surface (310) a une structure stratifiée d'un film de polyéthylène téréphtalate (PET) et d'un film de nylon, la couche de barrière métallique est formée d'une feuille d'aluminium, et la couche adhésive comprend au moins un polymère choisi parmi le polyéthylène haute densité (HDPE), le polyéthylène basse densité (LDPE), le polyéthylène basse densité linéaire (LLDPE), le polypropylène coulé (CPP), le polypropylène orienté (OPP), le chlorure de polyvinylidène (PVDC), le chlorure de polyvinyle (PVC), le copolymère éthylène-acétate de vinyle (EVA) et le copolymère éthylène-alcool vinylique (EVOH).

6. Panneau d'isolation sous vide selon la revendication 4, dans lequel la couche de protection de surface (310) est collée à la couche de barrière métallique en utilisant une résine de polyuréthane (PU) et la couche de barrière métallique est collée à la couche adhésive (330, 440) en utilisant une résine de polyuréthane (PU).

7. Procédé de fabrication d'un panneau d'isolation sous vide comprenant
- la fabrication du matériau d'âme (100, 500, 600) selon la revendication 1;
- l'application d'une pression de 0,5 à 10 Pa sur le matériau d'âme à une température de 50 à 250 °C pendant 10 à 200 minutes pour éliminer les restes du matériau d'âme; et
- l'entourage du matériau d'âme par un matériau de coque (300, 400, 520, 620), suivi d'un emballage sous vide.
